# EUROPEAN PATENT SPECIFICATION

(11) **EP 1 469 088 B1**
(45) Date of publication and mention of the grant of the patent: **17.08.2011**
(21) Application number: 04008374.3
(22) Date of filing: 06.04.2004
(51) Int. Cl.: C21D 8/12, B22D 11/06

(54) **Method for manufacturing non-oriented electrical steel sheet having high magnetic flux density**
Herstellungsverfahren von nicht-kornorientiertem Elektrostahlblech mit hoher Magnetflussdichte.
Procédé pour fabrication d'une tôle d'acier magnétique non-orientée présentant une densité de flux magnétique élevée.

(30) Priority: 10.04.2003 JP 2003106992
(43) Date of publication of application: 20.10.2004
(73) Proprietor: Nippon Steel Corporation, Tokyo (JP)
(72) Inventor: Kurosaki, Yousuke, Futtsu-shi Chiba (JP); Kubota, Takeshi, Futtsu-shi Chiba (JP); Yamamura, Hideaki, Futtsu-shi Chiba (JP); Arai, Takashi, Futtsu-shi Chiba (JP); Ishimaru, Eiichiro, Hikari-shi Yamaguchi (JP); Arita, Yoshihiro, Kitakyushu-shi Fukuoka (JP); Suichi, Isao, Hikari-shi Yamaguchi (JP); Kosuge, Kenji, Hirohata-ku Himeji-shi Hyogo (JP)
(74) Representative: Vossius & Partner

(56) References cited:
- PATENT ABSTRACTS OF JAPAN vol. 0121, no. 17 (C-487), 13 April 1988 (1988-04-13) & JP 62 240714 A (NIPPON STEEL CORP), 21 October 1987 (1987-10-21)
- PATENT ABSTRACTS OF JAPAN vol. 0180, no. 54 (M-1549), 27 January 1994 (1994-01-27) & JP 5 277657 A (NIPPON STEEL CORP), 26 October 1993 (1993-10-26)
- PATENT ABSTRACTS OF JAPAN vol. 0184, no. 30 (C-1236), 11 August 1994 (1994-08-11) & JP 6 128642 A (NIPPON STEEL CORP), 10 May 1994 (1994-05-10)
- PATENT ABSTRACTS OF JAPAN vol. 0144, no. 78 (M-1036), 18 October 1990 (1990-10-18) & JP 2 192853 A (NIPPON STEEL CORP), 30 July 1990 (1990-07-30)

## Description

The present invention relates to a method for manufacturing low iron loss non-oriented electrical steel sheet having extremely high magnetic flux density in the L and C directions.

Non-oriented electrical steel sheets are used for large sized generators, motors, and small sized stationary electric devices such as stabilizers or devices for audio goods.

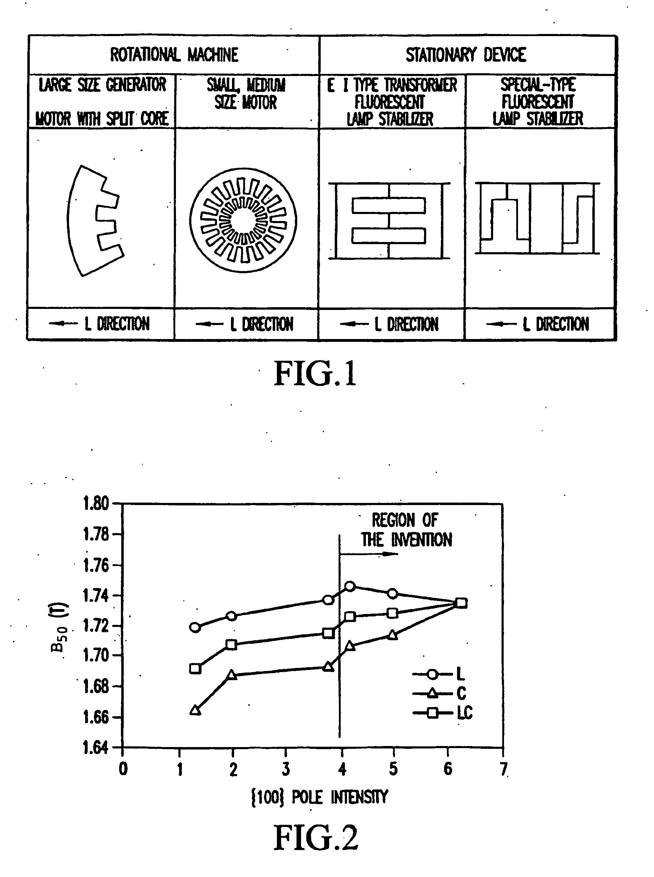

Cut-outs of steel sheets, such as shown in FIG.1, have magnetic paths formed mainly in the rolling direction (hereinafter referred to as L direction) and in the perpendicular direction to the L direction (hereinafter referred to as the C direction). Recently a split core shown in FIG.1 or a stator core formed by arranging cut-out T-shaped steel sheets annularly has been used for manufacturing an electric motor. A low iron loss non-oriented electrical steel sheet having high magnetic flux density in L and C directions has been demanded for these products.

A quench (rapid cooling) solidification method is one of the manufacturing methods for making the non-oriented electrical steel sheet having high magnetic flux density. In quench solidification, molten steel is solidified on a moving cooling wall to form a steel cast strip, and the steel cast strip is cold-rolled to a predetermined thickness, and then annealed in a final step to become a non-oriented electrical steel sheet. In JP-A-62-240714 (JP '714), a method is disclosed where a steel cast strip having a mean grain size equal to or more than 50µm is prepared and then the steel cast strip is rolled so as to establish a reduction rate of more than 50%. From Example 1 of JP-A-62-240714, it is reasonable to consider that the starting steel material contains equiaxial crystals, since the starting steel cast strip is disclosed to have crystals having a mean grain size of 0.5mm and the thickness of the strip is 1.4mm. It is also disclosed that the texture suitable for the stated purpose is obtained by controlling the cold reduction rate. For example, a {100}<001> type texture suitable for a small stationary electric device is obtained with more than a 50% reduction rate and a {100}<025> type texture suitable for a rotational machine is obtained with more than a 70% cold reduction rate. FIG.2 in JP-A-62-240714 shows that there is a relationship between a cold reduction rate and a magnetic flux density in both L and C directions, i.e., the magnetic flux density decreases as the reduction rate exceeds 70%.

Large sized generators, small sized stationary devices and motors having a split core require a steel sheet having high magnetic flux density in both L and C directions to save energy and resources. However, a non-oriented electrical steel sheet having a very high magnetic flux density (especially in both L and C directions) can not be obtained by the method disclosed in JP '714, because: (a) the molten steel is solidified at a cold reduction rate exceeding 70% on a moving cooling wall; and (b) the steel cast strip has crystals having mean grain size of more than 50µm. As disclosed *infra*, under conditions (a) and (b), the magnetic flux density increases with increasing cold reduction rate until the reduction rate hits about 70% at which point the magnetic flux begins to decrease.

Generally it is known that cracks are likely to occur by rolling a steel cast strip at room temperature where the steel cast strip is obtained with a quench solidification method because the steel cast strip obtained with quench solidification method is very brittle.

An object of the invention is to provide a method for manufacturing a low iron loss non-oriented electrical steel sheet having extremely high magnetic flux density in L and C directions which can not be obtained by the method disclosed in JP-A-62-240714.

This object can be achieved by the features defined in the claims. Namely, the object is accomplished by the following method.

A method for manufacturing non-oriented electrical steel sheet having high magnetic flux density comprising the steps of: preparing a molten steel containing, in mass %, 0.008% or less of C, 1.8% to 7% of (Si + 2Al), 0.02 to 1.0% of Mn, 0.005% or less of S, 0.01% or less of N, and the balance Fe and unavoidable impurities; solidifying the molten steel on at least one moving cooling wall to form a steel cast strip; cold-rolling the steel cast strip to a predetermined thickness; and finally annealing the cold-rolled steel; wherein the {100} pole intensity, which is a ratio of the integrated inverse pole intensity of the {100} plane at the midplane of a steel cast strip [for a given sample of the cold-rolled steel] to the integrated inverse pole intensity of {100} plane for a "random" sample in which crystal grains have random orientations, is at least 4 and a cold reduction rate of the cold-rolling is between 70% and 85%.

According to the present invention, the superheating degree of the molten steel before the solidification is 70°C or more. A superheating degree of molten steel is defined as a difference between the molten steel temperature at the casting and liquidus temperature.
The invention is described in detail in conjunction with the drawings, in which;

FIG.1 shows applications of non-oriented electrical steel sheet and a blank layout for the application,

FIG.2 is a graph showing a relationship between a {100} pole intensity and a magnetic flux density B₅₀,

FIG.3 a) is a photo showing a solidified structure of a steel cast strip of which the {100} pole intensity is 1.3,

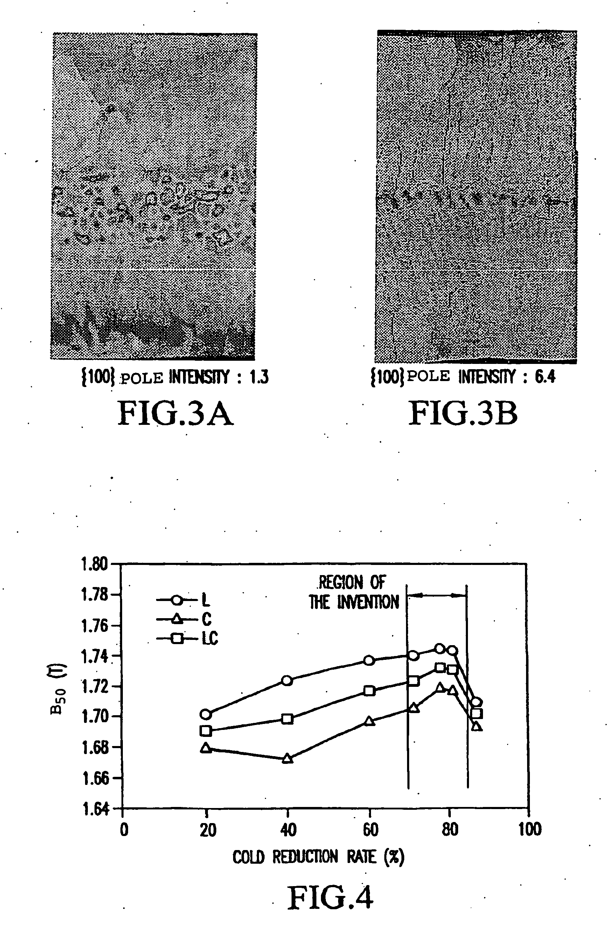

FIG.3 b) is a photo showing solidified structure of a steel cast strip of which the {100} pole intensity is 6.4, and

FIG.4 is a graph showing a relationship between a cold reduction rate and a magnetic flux density B₅₀.

It was found that it is very effective to control the solidified structure, the texture of a steel cast strip and the cold reduction rate (applied to the strip within a certain narrow range) in the quench solidification method in order to manufacture the non-oriented electrical steel sheet having high magnetic flux density. FIG.2 shows an example of experimental results performed by the inventors. Molten steel containing, in mass %, 0.0011 to 0.0013% of C, 3.1% of Si, 1.1% of Al, 0.26% of Mn, 0.0022 to 0.0026% of S and 0.0013 to 0.0016% of N, was quench solidified by a twin roll casting method under various conditions to form a steel cast strip with 1.6mm thickness. The steel cast strip was cold-rolled at room temperature with a 78% reduction rate to form a 0.35mm thick steel sheet and the steel sheet was finally annealed at 1075°C for 30 seconds. FIG.2 shows that there is a relationship between: a) a ratio of the integrated inverse pole intensity of {100} at the midplane of a steel cast strip to the integrated inverse pole intensity of {100} plane for a "random" sample in which crystal grains have random orientations (herein referred to as simply "{100} pole intensity"); and b) a magnetic flux density B₅₀ of the steel sheet in L, C and LC directions. A magnetic flux density B₅₀LC is an average value of B₅₀ in L direction (B₅₀L) and B₅₀ in C direction (B₅₀C), i.e., B₅₀LC = (B₅₀L + B₅₀C)/2. FIG.2 indicates that magnetic flux density increases as {100} pole intensity exceeds 4. In the samples of FIG.2, different {100} pole intensities were prepared by changing the superheating degree of molten steel.

FIG.3 is two photos of strips of the solidified structures. The structure shown in FIG.3B has a {100} pole intensity of 6.4 and the structure shown in FIG.3A has a {100} pole intensity of 1.3. In the photos, the vertical direction is the thickness direction of the steel cast strip and the horizontal direction is the casting direction. In FIG.3B, the sample having a {100} pole intensity of 6.4 has well-developed columnar crystals extending from the surface toward the center layer. On the contrary, in FIG.3A, the sample having a {100} pole intensity of 1.3 has a lot of spherical equiaxial crystals and almost no columnar crystals. In view of this, it was found that it is important to form a texture which is rich in {100}<0vw> by developing as much columnar crystals as possible.

FIG.4 shows the relationship between the cold reduction rate and the magnetic flux density B₅₀ with respect to samples of strips obtained by cold-rolling a steel cast strip at room temperature, having a {100} pole intensity of 5.0 which was obtained in the experiment of FIG.2, with various cold reduction rates, and annealing the strip in a final step at 1075°C for 30 seconds. FIG.4 indicates that the highest magnetic flux density is obtained by cold-rolling a steel cast strip of 5.0 {100} pole intensity at 70 - 85% cold reduction rate.

It was found by the inventors that under the temperature condition of cold-rolling adopted for the samples in Fig.3 and Fig.4, edge cracks form in some samples. Table 1, below, shows the relationship between temperature of cold-rolling, depth of edge cracks in a case where cracks are found, and magnetic flux density B₅₀ with respect to samples of strips obtained by cold-rolling a steel cast strip with reduction rate of 78%, having a {100} pole intensity of 5.0 which was obtained in the experiment of Fig.2, at various rolling temperatures, and annealing the strip in a final step at 1075 °C for 30 seconds.

As shown in Table 1, it is newly found that edge cracks are prevented and an increase of 0.01T for the magnetic flux density B₅₀ is achieved by cold-rolling of a steel cast strip at a temperature above 180°C.

**Table 1**

| No. | Temperature of Cold-Rolling (°C) | Depth of edge cracks in a case which cracks are found (mm) | B₅₀ LC (T) |
|---|---|---|---|
| 1 | 20 | 50 | 1.732 |
| 2 | 50 | 45 | 1.732 |
| 3 | 100 | 20 | 1.737 |
| 4 | 150 | 10 | 1.739 |
| 5 | 180 | No cracks | 1.743 |
| 6 | 250 | No cracks | 1.745 |
| 7 | 350 | No cracks | 1.746 |
| 8 | 370 | No cracks | 1.746 |

In an embodiment of the present invention, the annealing step is performed in a range of 750-1250°C for 10-180 seconds. Preferably, the annealing step is performed in a range of 850-1200°C for 20-180 seconds. Most preferably, the annealing step is performed in a range of 1000-1200°C for 25-60 seconds.

As mentioned above, in JP-A-62-240714, a method is proposed where a steel cast strip having a mean grain size equal to or more than 50µm is prepared and then the steel cast strip is rolled so as to establish a cold reduction rate of more than 50%. In this reference, however, it is reasonable to conclude that equiaxial crystals are used in the starting material. This conclusion is based on the observation that the data given in FIG.2 of Example 1 of JP-A-62-240 714 is of a strip having a mean grain size of crystals of 0.5mm and a thickness of 1.4mm. This steel sample has a reduction in the magnetic flux density as the cold reduction rate exceeds 70%.

In the present invention, it is newly found that the high magnetic flux density can be obtained by using a steel cast strip having columnar crystals and applying a cold reduction rate of 70 - 85%. While the sample having a {100} pole intensity of 1.3 is recognized to have equiaxial grains in the center layer of the strip as shown in FIG.3A, the B₅₀ in LC direction is 1.69T at a cold reduction rate of 78%, as shown in FIG. 2. However, in the region of the present invention where the texture of a steel strip is rich in {100}<0vw> having developed columnar crystals using a 70 - 85% cold reduction rate, the B₅₀ in the LC direction is more than 1.72T as shown in FIGs. 2 and 4, which leads to increasing the magnetic flux density by 0.03T or more.

It is also newly found that edge cracks are prevented and an increase of 0.01T for the magnetic flux density is achieved by cold-rolling of a steel cast strip at a temperature above 180°C, as shown in Table 1, above.

In the steel sheet of the invention, in mass %, the C content is up to 0.008% so that a dual-phase of austenite and ferrite is not formed and a single phase is formed of ferrite which develops as much columnar crystals as possible. Preferably, the C content is 0.0002% to 0.008%.

If the (Si + 2Al) % is 1.8% or more and the C % is 0.008 % or less, a dual-phase of austenite and ferrite is not formed but a single phase of ferrite is formed, which encourages the columnar crystals to develop. When (Si + 2Al) % exceeds 7%, cold-rollability deteriorates. So the upper limit of (Si + 2Al) % is 7 % and the lower limit is 1.8 %.

Mn % is 0.02% to 1 % to improve the brittleness. If the Mn content exceeds 1 %, the magnetic flux density deteriorates.

S % is 0.005 % or less to avoid formation of fine sulfides which have an adverse affect on iron loss. Preferably, the S content is 0.0002% to 0.005%.

N % is 0.01 % or less to avoid formation of fine nitrides such as AlN which have an adverse affect on iron loss. Preferably, the N content is 0.0002% to 0.01%.

Molten steel is solidified on at least one moving cooling wall to form a steel cast strip. The single roll method and twin roll method can be used.

The {100} pole intensity should be 4 or more. High magnetic flux density is obtained when columnar crystals are developed in the steel cast strip and the {100} pole intensity is 4 or more as shown in FIG.2 and FIG.3.

It is effective to adjust a superheating degree of molten steel in order to control the {100} pole intensity. A superheating degree of molten steel is defined as a difference between the molten steel temperature at the casting and the liquidus temperature. As shown in the example below, a superheating degree of 70°C or more enables a {100} pole intensity of 4 or more.

The reduction rate of cold-rolling is applied at 70 - 85 %. As shown in FIG.4, in the cases when the reduction rate is less than 70 % or more than 85 %, a high magnetic flux density can not be obtained.

Preferably, cold-rolling before annealing is performed at a temperature between 180 and 350 °C. As shown in Table 1 above, in the cases when the cold-rolling is performed below 180 °C, there is a possibility that edge cracks will form. In the cases when the cold-rolling is performed above 350 °C, the increase in the magnetic flux density B₅₀ is saturated. A strip can be cold-rolled at a temperature above 180 °C by rolling a quench solidified strip before the temperature of the strip comes down below 180 °C. A strip can also be heated above 180 °C with using an external heating device such as an electric furnace and a gas oven.

### Example 1

Molten steel containing, in mass %, 0.0009% of C, 3.0% of Si, 0.20% of Mn, 1.2% of Sol. Al, 0.0007 to 0.0018% of S and 0.0018 to 0.0024% of N, was quench solidified by the twin roll method under various superheating degrees to form steel cast strips with various thicknesses. The liquidus temperature of the steel was 1490°C. Then the steel cast strips were pickled, cold-rolled to steel sheets of 0.35mm thickness at room temperature, annealed at 1075°C for 30 seconds and finally coated with an insulation coating. Table 2 below, shows the relationship between a cold reduction rate, magnetic properties and the {100} pole intensity. It was found that the combination of {100} pole intensity of 4 or more and cold reduction rate of 70 to 85 % can provide high magnetic flux density.

**TABLE 2**

| No. | {100} pole intensity | Superheating degree (°C) | Steel cast strip thickness (mm) | Cold reduction rate (%) | W_{15/50} LC (W/kg) | B₅₀ L (T) | B₅₀ C (T) | B₅₀ LC (T) | |
|---|---|---|---|---|---|---|---|---|---|
| 1 | 2.3 | 30 | 1.59 | 78 | 2.07 | 1.729 | 1.669 | 1.699 | Comp. Ex. |
| 2 | 3.5 | 55 | 1.59 | 78 | 2.06 | 1.734 | 1.691 | 1.713 | Comp. Ex. |
| 3 | 4.1 | 72 | 1.59 | 78 | 2.03 | 1.746 | 1.705 | 1.726 | Inv. Ex. |
| 4 | 5.5 | 88 | 1.59 | 78 | 2.01 | 1.739 | 1.720 | 1.730 | Inv. Ex. |
| 5 | 6.4 | 100 | 1.59 | 78 | 1.98 | 1.734 | 1.733 | 1.734 | Inv. Ex. |
| 6 | 5.5 | 89 | 0.88 | 60 | 2.05 | 1.735 | 1.697 | 1.716 | Comp. Ex. |
| 7 | 5.6 | 90 | 1.09 | 68 | 2.05 | 1.738 | 1.700 | 1.719 | Comp. Ex. |
| 8 | 5.3 | 88 | 1.25 | 72 | 2.03 | 1.741 | 1.707 | 1.724 | Inv. Ex. |
| 9 | 5.4 | 88 | 1.75 | 80 | 1.99 | 1.744 | 1.718 | 1.731 | Inv. Ex. |
| 10 | 5.2 | 85 | 2.19 | 84 | 2.02 | 1.724 | 1.720 | 1.722 | Inv. Ex. |
| 11 | 5.3 | 87 | 2.50 | 86 | 2.07 | 1.710 | 1.699 | 1.705 | Comp. Ex. |

### Example 2

Table 3 below, shows the relationship between temperature of cold-rolling, a cold reduction rate, depth of edge cracks, the {100} pole intensity and magnetic properties with respect to samples of strips obtained by cold-rolling a steel cast strip to steel sheets of 0.35mm thickness, which was obtained for preparing the sample No. 9 of Example 1 in Table 2, at various rolling temperatures, annealing the strip at 1075 °C for 30 seconds and applying an insulating membrane on the strip. According to a method of the present invention, a non-oriented electrical steel having high magnetic flux density without edge cracks can be manufactured by adopting conditions of a cold reduction rate of the cold-rolling between 70% and 85%, {100} pole intensity of at least 4 and a cold-rolling temperature between 180 and 350 °C.

**TABLE 3**

| No | {100} pole inten - sity | Superheating degree (°C) | Steel cast strip thick - ness (mm) | Cold reduction rate (%) | Cold reduc -tion temp. (°C) | Depth of edge cracks (mm) | W15/50 LC (w/kg) | B₅₀ L (T) | B₅₀ C (T) | B₅₀ LC (T) | |
|---|---|---|---|---|---|---|---|---|---|---|---|
| 12 | 5.4 | 88 | 1.75 | 80 | 20 | 55 | 1.99 | 1.744 | 1.718 | 1.731 | Inv. Ex. |
| 13 | 5.4 | 88 | 1.75 | 80 | 150 | 20 | 1.99 | 1.746 | 1.720 | 1.733 | Inv. Ex. |
| 14 | 5.4 | 88 | 1.75 | 80 | 180 | 0 | 1.98 | 1.753 | 1.726 | 1.740 | Inv. Ex. |
| 15 | 5.4 | 88 | 1.75 | 80 | 210 | 0 | 1.96 | 1.754 | 1.729 | 1.742 | Inv. Ex. |
| 16 | 5.4 | 88 | 1.75 | 80 | 350 | 0 | 1.96 | 1.754 | 1.729 | 1.741 | Inv. Ex. |

According to a method of the present invention, a low iron loss non-oriented electrical steel sheet having extremely high magnetic flux density in the L and C directions can be manufactured, which is suitable for use as an iron core for a large size electric generator, a small size stationary electric device, a motor (including split core), etc.

## Claims

1. A method for manufacturing non-oriented electrical steel sheet having high magnetic flux density comprising the steps of:
preparing a molten steel comprising, in mass %, up to 0.008% of C, 1.8% to 7% of (Si + 2Al), 0.02 to 1.0% of Mn, up to 0.005% of S, up to 0.01% of N, and the balance Fe and unavoidable impurities;
quench-solidifying the molten steel on a at least one moving cooling wall to form a steel cast strip whose {100} pole intensity is at least 4;
cold-rolling the steel cast strip to a predetermined thickness; and
annealing the cold-rolled steel;
wherein a cold reduction rate of the cold-rolling is between 70% and 85%; and wherein a superheating degree of the molten steel immediately before being quench-solidified is at least 70°C.

2. The method according to claim 1, wherein a superheating degree of the molten steel immediately before being quench-solidified is 70°C to 100°C.

3. The method according to claim 1 or 2, wherein the molten steel comprises, in mass %, 0.0011 - 0.0013% of C.

4. The method according to any one of claims 1 to 3, wherein the cold rolling is performed at a temperature of at least 180°C.

5. The method according to any one of claims 1 to 4, wherein the cold rolling is performed at a temperature of 180 to 350°C.

6. The method according to any one of claims 1 to 5, wherein the {100} pole intensity is 4 to 6.4.

7. The method according to any one of claims 1 to 6, wherein the cold-rolled steel has columnar crystals.

8. The method according to any one of claims 1 to 7, wherein the cold-rolled steel has a greater number of columnar crystals than spherical equiaxial crystals.

9. The method according to any one of claims 1 to 8 wherein the molten steel is quench-solidifield using the single roll casting method.

10. The method according to any one of claims 1 to 8, wherein the molten steel is quench-solidified using the twin roll casting method.

## Patentansprüche

1. Ein Verfahren zur Herstellung eines nicht-kornorientierten Elektrostahlblechs mit hoher Magnettlussdichte, umfassend die Schritte:
Herstellen eines geschmolzenen Stahls, umfassend, in Massen%, bis zu 0,008% C, 1,8% bis 7% (Si + 2Al), 0,02 bis 1,0% Mn, bis zu 0,005% S, bis zu 0,01% N, und den Rest bestehend aus Fe und unvermeidbaren Verunreinigungen;
Abschreckungsverfestigen des geschmolzenen Stahls auf wenigstens einer beweglichen Kühlwandung, um ein Stahlstranggussband zu bilden, dessen Strangintensität in {100} Richtung wenigstens 4 beträgt;
Kaltwalzen des Stranggussbands zu einer vorgegebenen Dicke; und
Glühen des kaltgewalzten Stahls;
wobei eine Kühlreduktionsrate des Kaltwalzens zwischen 70% und 85% beträgt; und
wobei ein Überhitzungsgrad des geschmolzenen Stahls, unmittelbar bevor er abschreckungsverfestigt wird, wenigstens 70°C beträgt.

2. Das Verfahren gemäß Anspruch 1, wobei ein Überhitzungsgrad des geschmolzenen Stahls, unmittelbar bevor er abschreckungsverfestigt wird, 70°C bis 100°C beträgt.

3. Das Verfahren gemäß Anspruch 1 oder 2, wobei der geschmolzene Stahl 0,0011 - 0,0013% C, in Massen%, umfasst.

4. Das Verfahren gemäß einem der Ansprüche 1 bis 3, wobei das Kaltwalzen bei einer Temperatur von wenigstens 180°C durchgeführt wird.

5. Das Verfahren gemäß einem der Ansprüche 1 bis 4, wobei das Kaltwalzen bei einer Temperatur von 180 bis 350 °C durchgeführt wird.

6. Das Verfahren gemäß einem der Ansprüche 1 bis 5, wobei die Strangintensität in {100} Richtung 4 bis 6,4 beträgt.

7. Das Verfahren gemäß einem der Ansprüche 1 bis 6, wobei der kaltgewalzte Stahl säulenartige Kristalle aufweist.

8. Das Verfahren gemäß einem der Ansprüche 1 bis 7, wobei der kaltgewalzte Stahl eine größere Anzahl an säulenartigen Kristallen als an sphärischen gleichachsigen Kristallen aufweist.

9. Das Verfahren gemäß einem der Ansprüche 1 bis 8, wobei der geschmolzene Stahl unter Verwendung des Einwalzen-Giessverfahrens abschreckungsverfestigt wird.

10. Das Verfahren gemäß einem der Ansprüche 1 bis 8, wobei der geschmolzene Stahl unter Verwendung des Zweiwalzen-Giessverfahrens abschreckungsverfestigt wird.

## Revendications

1. Procédé pour fabriquer une tôle magnétique en acier non orientée ayant une densité de flux magnétique élevée comprenant les étapes consistant à :
préparer un acier en fusion comprenant en % en masse jusqu'à 0,008 % de C, de 1,8 % à 7 % de (Si + 2Al), de 0,02 à 1,0 % de Mn, jusqu'à 0,005 % de S, jusqu'à 0,01 % de N et le reste de Fe et d'impuretés inévitables ;
solidifier par trempe l'acier en fusion sur au moins une paroi de refroidissement mobile afin de former une bande d'acier moulé, dont l'intensité de pôle {100} est au moins de 4 ;
laminer à froid la bande d'acier moulé sur une épaisseur prédéterminée ; et recuire l'acier laminé à froid ;
dans lequel un taux de réduction à froid du laminage à froid est comprise entre 70 % et 85 % ; et dans lequel une température de surchauffage de l'acier en fusion immédiatement avant d'être solidifié par trempe est d'au moins 70 °C.

2. Procédé selon la revendication 1, dans lequel une température de surchauffage de l'acier en fusion immédiatement avant d'être solidifié par trempe est de l'ordre de 70 °C à 100 °C.

3. Procédé selon la revendication 1 ou 2, dans lequel l'acier en fusion comprend en % en masse, 0,0011 - 0,0013 % de C.

4. Procédé selon l'une quelconque des revendications 1 à 3, dans lequel le laminage à froid est réalisé à une température d'au moins 180 °C.

5. Procédé selon l'une quelconque des revendications 1 à 4, dans lequel le laminage à froid est réalisé à une température de l'ordre de 180 à 350 °C.

6. Procédé selon l'une quelconque des revendications 1 à 5, dans lequel l'intensité de pôle {100} est de l'ordre de 4 à 6,4.

7. Procédé selon l'une quelconque des revendications 1 à 6, dans lequel l'acier laminé à froid a des cristaux colonnaires.

8. Procédé selon l'une quelconque des revendications 1 à 7, dans lequel l'acier laminé à froid a un plus grand nombre de cristaux colonnaires que de cristaux équiaxiaux sphériques.

9. Procédé selon l'une quelconque des revendications 1 à 8, dans lequel l'acier en fusion est solidifié par trempe à l'aide du procédé de coulée sur un seul cylindre.

10. Procédé selon l'une quelconque des revendications 1 à 8, dans lequel l'acier en fusion est solidifié par trempe à l'aide du procédé de coulée entre deux cylindres.
